# EUROPÄISCHE PATENTANMELDUNG

(11) **EP 1 927 876 A1**
(43) Veröffentlichungstag der Anmeldung: **04.06.2008**
(21) Anmeldenummer: 07114022.2
(22) Anmeldetag: 08.08.2007
(51) Int. Cl.: G02B 13/04

(54) **Weitwinkelobjektiv und Weitwinkelkamera**

(30) Priorität: 10.08.2006 DE 102006037568; 30.10.2006 DE 102006051195; 10.08.2006 DE 102006037566; 30.10.2006 DE 102006051194
(71) Anmelder: MEKRA Lang GmbH & Co. KG, 90765 Fürth (DE)
(72) Erfinder: Lang, Werner, 91465, Ergersheim (DE); Witzke, Michael, 91522, Ansbach (DE); Eckerl, Klaus, 94116, Hutthurm (DE); Reinhard, Thomas, 94116, Hutthurm (DE)
(74) Vertreter: Winter, Brandl, Fürniss, Hübner Röss, Kaiser, Polte Partnerschaft Patent- und Rechtsanwaltskanzlei

(57) **Zusammenfassung**

Es wird ein Weitwinkelobjektiv und eine damit ausgerüstete Weitwinkelkamera angegeben, dessen Bildfehler die Erkennung von Hindernissen bei Einsatz im automotiven Bereich nicht über Gebühr beeinträchtigt und die dennoch preislich im Bereich herkömmlicher Weitwinkelobjektive und Weitwinkelkameras für den automotiven Bereich liegen. Aufgrund des Einsatzortes im Außenbereich müssen Weitwinkelobjektive bzw. damit ausgerüstete Weitwinkelkameras mit einer Schutzabdeckung versehen werden. Um zu vermeiden, dass die optischen Abbildungseigenschaften der Weitwinkelobjektive durch die transparente Schutzabdeckung verändert werden, sind diese Schutzabdeckungen üblicherweise schalenförmig ausgebildet. Die Kosten für solche schalen- oder dome-förmigen Schutzabdeckungen sind erheblich, wenn man beachtet, dass die Schutzabdeckung die optischen Eigenschaften des zu schützenden Weitwinkelobjektivs nicht verändern soll. Dadurch, dass die Schutzabdeckung als plane, transparente Platte ausgeführt ist, wird die Schutzabdeckung erheblich preiswerter. Zwar muss dann die plane Platte bei der Berechnung des Weitwinkelobjektivs als optisches Element miterfasst werden. Dennoch sind überraschenderweise die Gesamtkosten gemäß dem Ansatz der vorliegenden Erfindung im Vergleich zu Einsatz einer schalenförmigen Schutzabdeckung geringer.

Das Weitwinkelobjektiv erfasst Licht von einem aufzunehmenden Objekt aus einem diagonalen Feldwinkel von 118° bzw. 142°.

## Beschreibung

Die Erfindung betrifft ein Weitwinkelobjektiv gemäß Anspruch 1,4 und 21 sowie eine Weitwinkelkamera nach Anspruch 40.

Bei Kraftfahrzeugen, insbesondere bei Nutzfahrzeugen werden immer mehr Kameras zur Überwachung der unmittelbaren Fahrzeugumgebung eingesetzt. Derartige Überwachungskameras werden üblicherweise starr an dem Fahrzeug montiert. Daher hier ein möglichst großes Blickfeld erfasst werden soll, werden üblicherweise vergleichsweise preiswerte Weitwinkelobjektive eingesetzt.

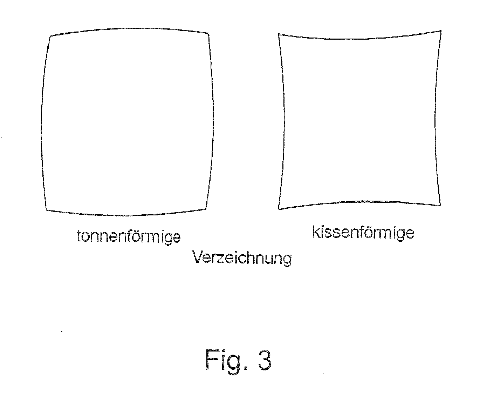

Diese Weitwinkelobjektive erfassen einen sehr großen diagonalen Feldwinkel von 100° oder mehr. Jedoch wird dieses große Blickfeld bzw. dieser große Feldwinkel durch eine starke Verzeichnung und durch eine geringere Helligkeit im Randbereich des Bildes erkauft. Unter Verzeichnung versteht man, dass gerade Linien im Randbereich gekrümmt abgebildet werden. Man unterscheidet zwischen einer tonnen- und einer kissenförmigen Verzeichnung, wobei bei Weitwinkelobjektiven eine tonnenförmige Verzeichnung bzw. in Prozenten ausgedrückt eine positive Verzeichnung auftritt - siehe Fig. 3. Für die Verzeichnung (y'-y)/y' mit y' als Bildhöhe ohne Verzeichnung und mit y als tatsächliche Bildhöhe mit Verzeichnung. In der Regel wird nur die radiale Verzeichnung, d. h. die Längenänderung durch die Abbildung entlang der Speichen eines Rades berücksichtig. In der vorliegenden Anmeldung beziehen sich die %-Angaben zur Verzeichnung auf diese radiale Verzeichnung.

Bei Objektiven also auch bei Weitwinkelobjektiven treten eine Vielzahl von Abbildungsfehlern auf, die so genannten sieben Seidelschen Bildfehler. Die Seidelschen Bildfehler sind in drei Gruppen einzuteilen: Schärfefehler (die sphärische Aberration, Koma, Astigmatismus), Lagefehler (Bildfeldwölbung, Verzeichnung) und Farbfehler (Farblängsfehler und Farbquerfehler). Jede Linse eines Objektives besitzt verschiedene Eigenschaften wie Glassorte, wie Krümmung (Radius der beiden Linsenflächen) und Dicke der Linse. Die Anordnung einer Mehrzahl von Linsen in einem Objektiv wird auch durch die Abstände der einzelnen Linsen voneinander, der Lage der Blende und der Schnittweite, d. h. dem Abstand der letzten Linsenfläche zur Bildebene charakterisiert. Diese Eigenschaften werden Parameter oder Freiheitsgrade genannt. Nach der Theorie kann jede dieser Freiheitsgrade benutzt werden um einen Bildfehler zu korrigieren. Umgekehrt ist auch jeder Freiheitsgrad an allen Bildfehlern beteiligt. Dies bedeutet, dass bei der üblichen Verwendung von Optikrechnern für jede einzelne Fläche die Bildfehler anteilig zuordnen kann.

Was das bedeutet, lässt sich anhand eines Beispiels nachvollziehen. Dieses Beispiel ist sehr wichtig, weil es darstellt, wie ein Entwickler eines Objektives, ein Optikrechner vorgeht und warum die Kreativität noch so eine große und entscheidende Rolle spielt. Man kann also die sieben Aberrationen korrigieren mit minimal acht unabhängigen Systemparametern (Freiheitsgraden). (Die Brennweite ist ebenfalls zu berücksichtigen). Ein Triplet (dreilinsiges Objektiv) könnte im Prinzip genügen. Ein Triplet ist normalerweise aus zwei sammelnden Außengliedern (Kronglas) und einem inneren Zerstreuungsglied (Flintglas) aufgebaut. Das ergibt sechs Radien und zwei Abstände zwischen den einzelnen Linsen. Als Anfang nimmt der Optikrechner Systemparameter wie Glasart, Dicke der Linse, Abstand zwischen den Linsen und Krümmung (Radius) der Glasflächen. Wir haben sechs Linsenflächen und können nun für jede Fläche berechnen, wie groß der Anteil der Bildfehler ist. Als Beispiel können wir sehr vereinfacht feststellen, dass in diesem Fall der Radius der zweiten Fläche (der ersten Linse) die sphärische Aberration und die chromatischen Fehler erzeugt, und der Radius der dritten Fläche Koma und Astigmatismus.

Der Optikrechner muss nun entscheiden, wie er diese Aberrationen korrigiert. Er könnte versuchen, die Krümmung der ersten Linse so zu ändern, dass die sphärische Aberration berücksichtigt werden kann. Aber die Krümmung bestimmt auch die Brennweite, die soll sich ja nicht ändern. Es kann auch der Fall sein, dass mit der Krümmung zwar der sphärische Fehler verringert wird, jedoch gleichzeitig der Anteil der Koma ansteigt. Er kann sich auch so entscheiden, dass die Korrektion über mehrere Systemparameter verteilt wird, um die Empfindlichkeit zu verringern. Wenn man durch gezielte Beeinflussung eines bestimmten Systemparameters versucht die Aberration so gut wie möglich zu korrigieren, hat man ein Problem, wenn bei der Fertigung gerade dieser Parameter nicht innerhalb der Toleranz liegt. Oder man muss sogar feststellen, dass die notwendige Toleranz zu klein ist und in der Fertigung gar nicht eingehalten werden kann.

Der Optikrechner wird die Systemparameter so lange ändern, bis die Korrektur der sieben Aberrationen so ausgelegt ist, dass die Fehlerreste ganz klein sind. Auch wird er versuchen, jeden Bildfehler mit verschiedenen Freiheitsgraden gleichzeitig zu korrigieren. Die "Last" der Korrektur wird dann über die verschiedenen Flächen verteilt und das ganze System wirkt entspannter. Der Entwickler kann innerhalb bestimmter Grenzen die Glasarten und die Krümmung wählen, aber jede Kombination wird eine andere Art der Gesamtkorrektur hervorrufen. Hat man nun das Triplet so konfiguriert, dass es den Anforderungen ungefähr genügt, wird man zum Beispiel feststellen, dass der Astigmatismus am Rand des Bildes fast verschwunden ist, aber im Feld noch ziemlich kräftig mitspielt. Hier stoßen wir auf ein neues Problem. Die sieben Seidelsche Bildfehler sind leider nicht die einzigen optischen Aberrationen. Man bezeichnet die Seidelsche Aberrationen als Bildfehler der dritten Ordnung. Es gibt logischerweise noch mehr Bildfehler höherer Ordnungen. Die wichtigsten sind die Fehler der fünften und siebten Ordnung. Diesen Fehlergruppen begegnet man nur, wenn die erste Gruppe (dritter Ordnung) gut korrigiert ist.

Theoretisch wird ein sehr kleiner Gegenstandspunkt auch als ein sehr kleiner Bildpunkt dargestellt. In der Praxis stimmt das nicht, weil es diese Aberrationen gibt, die das Spiel verderben. Ein Punkt wird nicht als Punkt, sondern als eine kleine Scheibe mit unterschiedlicher Helligkeitsverteilung abgebildet. Sobald diese Scheibe einen bestimmten Durchmesser unterschreitet, werden die Bildfehler höherer Ordnung sichtbar. Das ist eine vereinfachte Darstellung. In Wirklichkeit wirken diese Fehler immer, aber man bemerkt sie nur, wenn der Restfehler der dritten Ordnung klein ist.

Das Triplet-Beispiel, bei dem der Astigmatismus im Feld noch sichtbar ist, zeigt den Effekt dieser Bildfehler höherer Ordnung. Man kann einen bestimmten und ganz gut kontrollierten Rest der Seidelschen Bildfehler benutzen, um diesen Fehler der fünften/siebten Ordnung zu kompensieren. Das geht natürlich nur in beschränktem Maße und ein Triplet hat nur dann eine akzeptable Bildqualität, wenn der Feldwinkel und/oder die Blende klein sind.

Dieser Satz ist sehr wichtig. Ein bestimmtes optisches System (Anzahl und Konfiguration der Linsen) hat eine beschränkte Möglichkeit für die Korrektion der Bildfehler. Das bedeutet im Klartext, dass der Optikrechner nur mit viel Erfahrung und Kenntnis die richtige Wahl treffen kann, wenn eine neue Rechnung gefragt ist.

Computer und numerischer Methoden werden eingesetzt, um die wichtigen Abbildungsfehler besser zu kontrollieren und sie werden auch verwendet, um ein optisches System zu optimieren. Dieser Reichtum an Information kann aber auch seine eigenen Probleme herbeiführen. Dennoch ist die Aufgabe des Designers oder Optikrechners nicht unbedingt einfacher geworden. Mit Hilfe von Computern kann er lediglich mehr Parameter berücksichtigen und schneller und genauer rechnen.

Es besteht ein gewisses Verhältnis zwischen der Anzahl von Objektivparametern (Linsenkrümmung, Linsendicke, Abstand, Brechungsindex usw.), sprich Freiheitsgraden, und dem Grad der Korrektur eines optischen Systems. Mit mehr Freiheitsgraden hat der optische Rechner entsprechend mehr Möglichkeiten, ein System zu korrigieren. Wenn ein Rechner mehr optische Elemente einsetzt, könnte eine bessere Korrektur erreicht werden. Das hat aber erhebliche Kostensteigerungen zur Folge, noch dazu könnte das System stark auf Fertigungstoleranzen oder Gewichtssteigerungen reagieren.

Der Entwickler muss dann ein sehr gutes Verständnis der grundsätzlichen optischen Möglichkeiten einer bestimmten Konstruktion erarbeiten. Alle Konstruktionen benötigen eine Optimierung nach einer anfänglich viel versprechenden Skizze. Wenn eine Konstruktion nicht für einen Feinabgleich geeignet ist, kann der Entwickler nur ein minderwertiges Produkt erreichen.

Ein sechslinsiges Objektiv hat 10 freie Linsenflächen (Radien), sechs Linsendicken (eine pro Linse) und vier Abstände zwischen Linsen. Zusätzlich hat jeder Glastyp einen Brechungsindex und eine Dispersionsnummer. Auch muss die genaue Lage der Blende bestimmt werden. Mit diesen 36 Parametern (oder Freiheitsgraden) muss der Entwickler mehr als 60 (!) verschiedene Abbildungsfehler korrigieren. Jeder Parameter kann ungefähr 10.000 einzelne Werte betragen und wir müssen mehr als 6.000 verschiedene Strahlengänge für jede Änderung eines Parameters berechnen.

Die 36 Freiheitsgrade sind auch nicht ganz unabhängig. Einige müssen kombiniert werden, andere sind stark von anderen Parametern eingeschränkt. Demzufolge sind die 36 Freiheitsgrade auf ungefähr 20 reduziert, wodurch die Aufgabe noch komplizierter wird. Angesichts der gegebenen Bedingungen und Überlegungen ist es nicht überraschend, dass hunderte, wenn nicht tausende von Konstruktionen erarbeitet werden können, welche alle der gewünschten Lösung sehr nahe liegen. Es ist geschätzt worden, dass eine komplette Bewertung eines sechslinsigen Objektivs unter Einsatz sehr schneller Computer, die Strahlengänge mit einer Geschwindigkeit von 100.000 Oberflächen pro Sekunde berechnen können, 10 Jahre beanspruchen würde.

Das ist selbstverständlich nicht möglich. Um die beste Lösung aus dieser unendlichen Auswahl zu ermitteln, muss der Optikrechner eine gründliche Kenntnis der Effekte aller Abbildungsfehler auf die Bildqualität besitzen. Zusätzlich muss er fähig sein, diejenigen Faktoren der Bildqualität zu erkennen, welche die gewünschten Merkmale des optischen Systems herbeiführen können.

Bei dem Einsatz von Weitwinkelobjektiven zur Überwachung der unmittelbaren Umgebung um ein Fahrzeug soll einerseits ein möglichstes großes Bildfeld erfasst werden, da die Kameras üblicherweise starr am Fahrzeug montiert werden, und zum anderen sollen die zwangsläufig auftretenden Bildfehler das Erkennen von Hindernissen mit diesem Weitwinkelobjektiv nicht über Gebühr beeinträchtigen.

Darüber hinaus darf das Weitwinkelobjektiv konstruktiv nicht zu aufwendig werden, da es dann für Anwendungen im Kraftfahrzeugbereich zu teuer werden würde. Aus Kostengründen nimmt man bei zur Zeit erhältlichen Weitwinkelobjektiven und damit versehenen Kameras erhebliche Bildfehler in Kauf. Insbesondere nimmt man bei herkömmlichen Weitwinkelkameras im automotiven Bereich eine erhebliche Verzeichnung in Kauf. Die Verzeichnung bedingt aber, dass Hindernisse nicht ohne weiteres erkannt werden.

Es ist daher Aufgabe der vorliegenden Erfindung ein Weitwinkelobjektiv und eine damit ausgerüstete Weitwinkelkamera anzugeben, dessen Bildfehler die Erkennung von Hindernissen bei Einsatz im automotiven Bereich nicht über Gebühr beeinträchtigt und die dennoch preislich im Bereich herkömmlicher Weitwinkelobjektive und Weitwinkelkameras für den automotiven Bereich liegen.

Die Lösung dieser Aufgabe erfolgt durch die Merkmale des Anspruchs 1, 4, 21 bzw. 34.

Aufgrund des Einsatzortes im Außenbereich müssen Weitwinkelobjektive bzw. damit ausgerüstete Weitwinkelkameras mit einer Schutzabdeckung versehen werden. Um zu vermeiden, dass die optischen Abbildungseigenschaften der Weitwinkelobjektive durch die transparente Schutzabdeckung verändert werden, sind diese Schutzabdeckungen üblicherweise schalenförmig ausgebildet. Die Kosten für solche schalen- oder dome-förmigen Schutzabdeckungen sind erheblich, wenn man beachtet, dass die Schutzabdeckung die optischen Eigenschaften des zu schützenden Weitwinkelobjektivs nicht verändern soll.

Dadurch, dass die Schutzabdeckung als plane, transparente Platte ausgeführt ist, wird die Schutzabdeckung erheblich preiswerter. Zwar muss dann die plane Platte bei der Berechnung des Weitwinkelobjektivs als optisches Element miterfasst werden. Dennoch sind überraschenderweise die Gesamtkosten gemäß dem Ansatz der vorliegenden Erfindung im Vergleich zu Einsatz einer schalenförmigen Schutzabdeckung geringer.

Vorzugsweise ist die Schutzabdeckung eine planparallele Platte, da sich der optische Einfluss einer planparallelen Platte leichter bei der Berechnung des Objektivs berücksichtigen lässt.

Als Material für die Schutzabdeckung eignet sich besonders Glas, da Glas zum einen hervorragende optische Eigenschaften besitzt und da es zum anderen sehr widerstandsfähig ist. Hierbei ist zu berücksichtigen, dass der Durchmesser der Platte im Bereich von 5 cm liegt, d. h. die Zerbrechlichkeit von Glas spielt kaum eine Rolle.

Es wurde erkannt, dass ein wesentliches Problem beim Einsatz von Weitwinkelobjektiven im Kraftfahrzeugbereich die mit Weitwinkelobjektiven einhergehende Verzeichnung ist. D. h. insbesondere durch die Verzeichnung wird das einfache und schnelle Erkennen von Hindernissen erschwert. Bei einem Weitwinkelobjektiv mit einem diagonalen Feldwinkel von 118° oder 120° wird die Verzeichnung daher erfindungsgemäß durch das Weitwinkelobjektiv selbst auf <5% und vorzugsweise <3% beschränkt. Bei einem Weitwinkelobjektiv mit einem diagonalen Feldwinkel von 142° wird die Verzeichnung erfindungsgemäß durch das Weitwinkelobjektiv selbst auf <17% und vorzugsweise <15% beschränkt. Obwohl der automotive Einsatzbereich der vorliegenden Erfindung aus Kostengründen den Einsatz von aufwendigen Weitwinkelobjektiven ausschließt, wird dennoch die Korrektur der Verzeichnung durch entsprechende Ausgestaltung des Weitwinkelobjektivs und nicht durch elektronische Nachbearbeitung der aufgenommenen Bilder erreicht. Es hat sich überraschend gezeigt, dass dies mit vertretbarem Kostenaufwand möglich ist.

Gemäß einer vorteilhaften Ausgestaltung der Erfindung erfolgt diese Reduzierung der Verzeichnung vor allem durch eine asphärische Linse. Diese asphärische Linse ist vorzugsweise eine konkav-konvexe Biasphäre und ist die letzte Linse in dem Weitwinkelobjektiv vor dem Bildsensor bzw. vor der Bildebene.

Gemäß einer vorteilhaften Ausgestaltung der Erfindung wird die optische Baulänge des Objektivs auf 18 mm ±5 mm bei einem Feldwinkel von α = 120° beschränkt. Bei einem Feldwinkel von α = 142° wird die optische Baulänge des Objektivs auf 21,4 mm ±5 mm beschränkt. Dies erzwingt zum einen eine einfache Konstruktion und zum anderen ergibt sich ein Weitwinkelobjektiv, das für den Einsatz im Kraftfahrzeug klein genug ist.

Gemäß einer weiteren vorteilhaften Ausgestaltung der Erfindung enthält das Weitwinkelobjektiv maximal fünf Linsen, wobei die erste Linsengruppe maximal drei und die zweite Linsengruppe maximal zwei Linsen enthält. Diese Linsenzahl bietet einen guten Kompromiss zwischen Komplexität des Objektives und damit dem Preis und der Möglichkeit Bildfehler ausreichend zu korrigieren. Diese Kombination von einzelnen Linsen, ihre Anordnung und Dimensionierung bewirkt ein sehr großes Bildfeld und eine sehr kleine Verzeichnung. Auch die übrigen Bildfehler halten sich in tolerierbaren Grenzen.

Gemäß einer weiteren vorteilhaften Ausgestaltung der Erfindung ist die optische Blende bei der Ausführungsform mit einem diagonalen Feldwinkel von 118°/120° vom Eintrittsfenster aus betrachtet im Bereich von 60% ± 10% der optischen Baulänge angeordnet. Bei der Ausführungsform mit einem diagonalen Feldwinkel von 142° ist die Blende vom Eintrittsfenster aus betrachtet bei von 75% ± 10% der optischen Baulänge angeordnet. Es hat sich gezeigt, dass die Anordnung der Blende an dieser Stelle bzw. in diesem Bereich besonders geeignet ist, bei der geringen Anzahl der verwendeten Linsen die Linsenfehler und insbesondere die Verzeichnung zu reduzieren.

Gemäß einer weiteren vorteilhaften Ausgestaltung der Erfindung sind zumindest die Linsen der ersten Linsengruppe in direktem Kontakt zueinander ohne Abstandselemente angeordnet. Bei Ausführungsform mit einem diagonalen Feldwinkel von 118°/120° ist es auch vorteilhaft, dass die Linsen der zweiten Linsengruppe in direktem Kontakt ohne Distanzelement zueinander angeordnet sind. Auf diese Weise wird eine besonders geringe optische Baulänge ermöglicht. Auch Toleranzen lassen sich dadurch besser einhalten, da die Abstandselemente fehlen und folglich in der Gesamttoleranz nicht berücksichtigt werden müssen.

Gemäß einer weiteren bevorzugten Ausführungsform der Erfindung beträgt der Durchmesser der optischen Blende bei der Ausführungsform mit einem diagonalen Feldwinkel von 118°/120° 1,26 mm ± 0,5 mm und bei der Ausführungsform mit einem diagonalen Feldwinkel von 142° 0,85 mm ± 0,5 mm. Durch diese Dimensionierung wird die gewünschte Reduzierung der Verzeichnung besonders begünstigt.

Die Dimensionierung der fünf Linsen gemäß der vorteilhaften Ausgestaltung der Erfindung nach Anspruch 14 bzw. 31 mit den dort angegebenen Toleranzen liefern zufrieden stellende Resultate hinsichtlich der Reduzierung der Verzeichnung und der sonstigen optischen Eigenschaften des Weitwinkelobjektivs gemäß der vorliegenden Erfindung.

Gemäß einer vorteilhaften Ausgestaltung wird die Blende durch eine kreisrunde Öffnung in einer zylindrischen Bohrung realisiert. Durch diese Maßnahme werden störende Reflexionen durch streifenden Lichteinfall wie bei einer üblicherweise verwendeten konischen Bohrung verhindert.

Gemäß einer weiteren vorteilhaften Ausgestaltung der Erfindung ist die erste Linse der zweiten Linsengruppe besonders zur Korrektur der Bildfeldwölbung ausgelegt. Durch diese Korrektur wird die räumlich gekrümmte Bildfläche des Weitwinkelobjektivs auf die plane Sensorfläche des Bildsensor angepasst bzw. es werden daraus resultierende Bildfehler korrigiert und verringert.

Gemäß einer vorteilhaften Ausgestaltung nach Anspruch 39 wird die Blende durch eine kreisrunde Öffnung in einer zylindrischen Bohrung realisiert. Durch diese Maßnahme werden störende Reflexionen durch streifenden Lichteinfall wie bei einer üblicherweise verwendeten konischen Bohrung verhindert.

Die weiteren Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer bevorzugten Ausführungsform anhand der Zeichnungen.

Es zeigt:
- Fig. 1: eine Schnittdarstellung einer beispielhaften Ausführungsform einer Weitwinkelkamera mit einer elektronischen Bildaufnahmeeinheit gemäß der vorliegenden Erfindung,
- Fig. 2: ein optisches Funktionsschaltbild der beispielhaften Ausführungsform nach Fig. 1 mit einer Darstellung der Strahlengänge aus verschiedenen Feldwinkeln, und
- Fig. 3: eine schematische Darstellung der Verzeichnung als einen der Seidelschen Bildfehler.

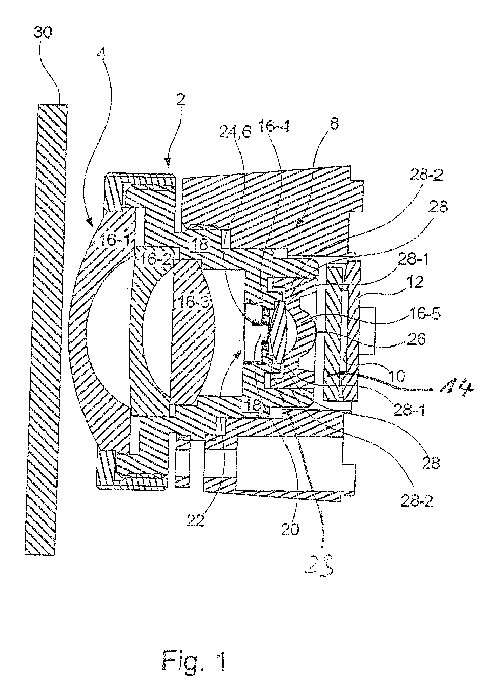

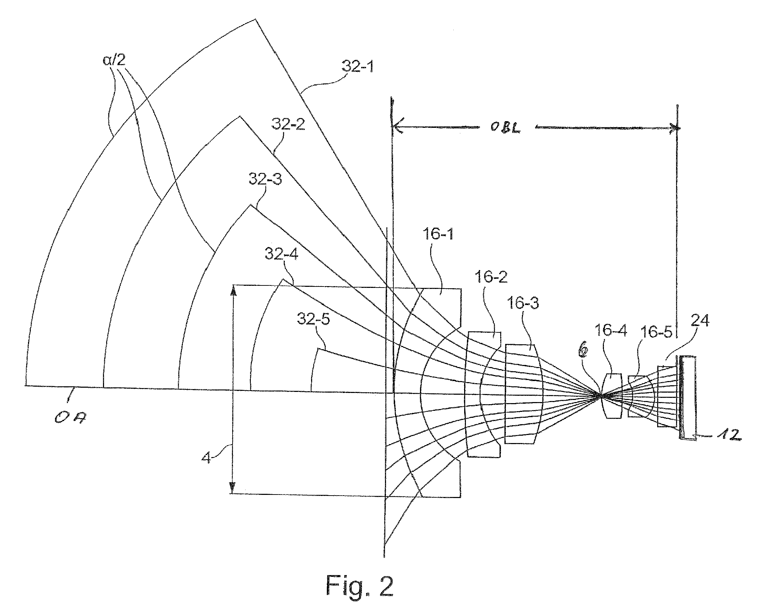

Die Fig. 1 und 2 zeigen eine beispielhafte Ausgestaltung der Erfindung. Fig. 1 zeigt eine Weitwinkelkamera mit einem Weitwinkelobjektiv gemäß der vorliegenden Erfindung in Längsschnitt entlang der optischen Achse des Objektivs und Fig. 2 zeigt die Strahlengänge durch das Weitwinkelobjektiv nach Fig. 1 unter verschiedenen Feldwinkeln α.

Licht von einem aufzunehmenden Objekt trifft über den Feldwinkel α auf eine erste Linsengruppe 2, die eine Eintrittsöffnung 4 festlegt. In Richtung des von dem aufzunehmenden Objekt einfallenden Lichtes hinter der ersten Linsengruppe 2 ist eine optische Blende 6 angeordnet. Hinter der optischen Blende 6 ist eine zweite Linsengruppe 8 vorgesehen. Hinter der zweiten Linsengruppe 8 ist eine ebene Bildfläche 10 vorgesehen, in der eine elektronische Bildaufnahmeeinheit in Form eines CCD-Sensors 12 mit einer Mehrzahl von Pixeln angeordnet ist. Zwischen dem CCD-Sensor 12 und der zweiten Linsengruppe 8 ist ein IR-Cut-Filter 14 angeordnet. Durch den IR-Cut-Filter 14 wird IR-Strahlung ausgefiltert, die zu einer Verschlechterung der Bildqualität führen würde. Dies gilt vor allem für die Farbdarstellung bei Farbkameras, da bei höherem IR-Anteil die Farbwirkung beeinträchtigt wird.

Die erste Linsengruppe 2 umfasst eine erste Linse 16-1, eine zweite Linse 16-2 und eine dritte Linse 16-3. Die zweite Linsengruppe 8 umfasst eine vierte Linse 16-4 und eine fünfte Linse 16-5. Die Linsen 16-1, 16-2 und 16-3 der ersten Linsengruppe 2 sind unmittelbar aneinander angeordnet, d.h. es sind keine Abstandselemente dazwischen vorgesehen. Zwischen der vierten und der fünften Linse 16-4, 16-5 kein ein nicht dargestellter Distanzring mit einer Dicke von 0,7 mm angeordnet werden. Alle fünf Linsen 16-1 bis 16-5 werden durch eine Linsenhalterung 18 gehalten. Hierbei greift die Linsenhalterung 18 jeweils an den radialen Rändern der fünf Linsen 16-1 bis 16-5 an. Die Öffnung der Linsenhalterung 18 definiert auch die Größe des Eintrittsfensters 4.

Die optische Blende 6 befindet sich unmittelbar vor der vierten Linse 16-4. Die Blende 6 ist physisch in der Linsenhalterung 18 ausgebildet, die sich in den Raum zwischen der dritten und der vierten Linse 16-3, 16-4 um die optische Achse OA erstreckt. In diesem Teil der Linsenhalterung 18 ist eine zylindrische Sackbohrung 20 eingebracht, die eine Eintrittsöffnung 22 der Blende 6 definiert. Im Boden der Sackbohrung 20 ist eine zweite Bohrung 23 eingebracht, die eine Austrittsöffnung 24 aus der Blende 6 festlegt, so dass Licht durch die Blende 6 hindurch treten kann. Der Durchmesser der Sackbohrung 20 ist größer als der Durchmesser der zweiten Bohrung 22. Der Durchmesser der zweiten Bohrung 23 bestimmt den Durchmesser bzw. die Größe der Blende 6. Die Sackbohrung 20 und die zweite Bohrung 23 ist zentrisch zur optischen Achse OA angeordnet, so dass die Blende 6 zentrisch zur optischen Achse OA liegt. Die Austrittsöffnung 24 ist unmittelbar vor der vierten Linse 16-4 angeordnet und ihre Größe bestimmt die Größe der Blende 6. Durch die nicht-trichterförmige Ausgestaltung der Bohrung 20 wird streifender Lichtdurchtritt durch die Blende 6, was zu unerwünschten Reflexionen führt, vermieden. Die vierte Linse 16-4 ist unmittelbar auf die Blende 6 aufgesetzt.

Nachfolgend werden für zwei verschiedene Ausführungsformen der Erfindung die spezifischen und charakteristischen optischen Parameter angegeben. Der Aufbau und die Struktur dieser beiden Ausführungsformen ist sehr ähnlich und wird in beiden fällen durch die Darstellungen in Fig. 1 und 2 wieder gegeben.

Die erste Ausführungsform weist einen Feldwinkel von α = 120° auf.
Die erste Linse 16-1 ist konvex-konkav geformt und weist einen Radius R₁₁ und einen zweiten Radius R₁₂ auf die Krümmungsradien der einzelnen Linsen sind aus der nachfolgenden Tabelle zu entnehmen. Die zweite Linse 16 ist ebenfalls konvex-konkav geformt mit einem ersten Radius R₂₁ und einem zweiten Radius R₂₂. Die dritte Linse ist bikonvex mit einem ersten Radius R₃₁, einem zweiten Radius R₃₂. Die vierte Linse ist bikonvex geformt mit einem ersten Radius R₄₁ und einem zweiten Radius R₄₂. Die fünfte Linse ist eine konkav-konvex asphärische Linse. Die Dicken, Durchmesser Radien und Brechzahlen der fünf Linsen 16-i sowie deren Abstände zueinander sind aus nachfolgenden Tabelle 1 zu ersehen.

**Tabelle 1**

| | | **Radien /mm** | **Dicken/ mm** | **Brechzahlnd / 587 nm** | **Durchmesser/mm** |
|---|---|---|---|---|---|
| erste Linse 16-1 | R11 | +11,60 | 1,50 | 1,79 | 16,00 |
| | R12 | - 5,20 | | | |
| Luftabstand | | | 3,00 | | |
| zweite Linse 16-2 | R21 | +45,20 | 0,80 | 1,77 | 11,00 |
| | R22 | - 6,10 | | | |
| Luftabstand | | | 1,60 | | |
| dritte Linse 16-3 | R31 | +44,90 | 2,90 | 1,84 | 9,50 |
| | R32 | +10,90 | | | |
| Luftabstand | | | 4,00 | | |
| Blende | | | 0,04 | | 1,26 |
| vierte Linse 16-4 | R41 | +4,30 | 1,40 | 1,77 | 4,00 |
| | R42 | +7,80 | | | |
| Luftabstand | | | 0,90 | | |
| fünfte Linse 16-5 | R51 | -0,53 | 1,00 | 1,53 | 2,40 |
| | R52 | +1,10 | | | 2,90 |

Die Durchmesserangaben zu der fünften Linse beziehen sich auf die optisch wirksamen Durchmesser. Als räumliches Bauteil weist die fünfte Linse 16-5 einen Durchmesser von 7 mm auf.

Die Asphärenkoeffizienten cᵢ und die konischen Konstanten K der fünften Linse 16-5 der ersten Ausführungsform sind aus der nachfolgenden Tabelle 2 zu ersehen.

**Tabelle 2**

| Radien | Asphärenkoeffizienten | | | | Konische Konstante K |
|---|---|---|---|---|---|
| | C2 | C4 | C6 | C8 | |
| R51 | 0,65470 | 0,06311 | 0,08367 | 0,03340 | -0,84600 |
| R52 | 0,02660 | 0,03690 | 0,01090 | 0,01770 | -0,50240 |

Das Eintrittsfenster weist einen Durchmesser von 14 mm und die Blende einen Durchmesser von 1,26 mm auf.

Die zweite Ausführungsform weist einen Feldwinkel von α = 142° auf. Die erste Linse 16-1 ist konvex-konkav geformt und weist einen Radius R₁₁ und einen zweiten Radius R₁₂ auf die Krümmungsradien der einzelnen Linsen sind aus der nachfolgenden Tabelle zu entnehmen. Die zweite Linse 16-2 ist ebenfalls konvex-konkav geformt mit einem ersten Radius R₂₁ und einem zweiten Radius R₂₂. Die dritte Linse ist plan-konvex mit einem ersten Radius R₃₁ = ∞ und einem zweiten Radius R₃₂. Die vierte Linse ist bikonvex geformt mit einem ersten Radius R₄₁ und einem zweiten Radius R₄₂. Die fünfte Linse ist eine konkav-konvex asphärische Linse. Die Dicken, Durchmesser Radien und Brechzahlen der fünf Linsen 16-i sowie deren Abstände zueinander sind aus nachfolgenden Tabelle 3 zu ersehen.

**Tabelle 3**

| | | Radien /mm | Dicken/ mm | Brechzahlnd / 587 nm | Durchmesser/mm |
|---|---|---|---|---|---|
| erste Linse 16-1 | R11 | +13,73 | 0,84 | 1,77 | 16,00 |
| | R12 | - 4,75 | | | |
| Luftabstand | | | 3,11 | | |
| zweite Linse 16-2 | R21 | +153,44 | 0,72 | 1,79 | 11,00 |
| | R22 | - 6,04 | | | |
| Luftabstand | | | 1,62 | | |
| dritte Linse 16-3 | R31 | ∞ | 3,66 | 1,85 | 9,50 |
| | R32 | +8,54 | | | |
| Luftabstand | | | 3,74 | | |
| Blende | | | 0,01 | | 0,85 |
| vierte Linse 16-4 | R41 | +6,80 | 1,24 | 1,75 | 4,00 |
| | R42 | +4,22 | | | |
| Luftabstand | | | 0,83 | | |
| fünfte Linse 16-5 | R51 | -0,42 | 1,24 | 1,53 | 2,10 |
| | R52 | +0,59 | | | 2,72 |

Die Durchmesserangaben zu der fünften Linse beziehen sich auf die optisch wirksamen Durchmesser. Als räumliches Bauteil weist die fünfte Linse 16-5 einen Durchmesser von 7 mm auf.

Die Asphärenkoeffizienten cᵢ und die konischen Konstanten K der fünften Linse 16-5 sind aus der nachfolgenden Tabelle 3 zu ersehen.

**Tabelle 4**

| Radien | Asphärenkoeffizienten | | | | Konische Konstante K |
|---|---|---|---|---|---|
| | C2 | C4 | C6 | C8 | |
| R51 | 0,92546 | 0,17160 | 0,22119 | -0,00761 | -0,88956 |
| R52 | 0,32994 | 0,18753 | -0,03589 | 0,06766 | -0,83027 |

Das Eintrittsfenster weist bei der zweiten Ausführungsform einen Durchmesser von 15,6 mm und die Blende einen Durchmesser von 0,85 mm auf.

Zu der Darstellung der asphärischen Flächen der fünften Linse 16-5 wird auf das Fachbuch Naumann/Schröder, Bauelement der Optik, Taschenbuch der technischen Optik, 5. Aufl., 1987, S. 145ff verwiesen.

Die fünfte Linse 16-5 besteht aus Kunststoff, ist einstückig ausgebildet und besitzt einen Linsenteil 26 und einen Halteteil 28. Der Linsenteil 26 stellt eine asphärische, konkav-konvexe Linse dar, die die optische Funktion der fünfte Linse 16-5 bereitstellt. Das Halteteil 28 erstreckt sich ringförmig von dem Rand des Linsenteils 26 weg, wobei in Schnittdarstellung - siehe Fig. 1 - das Halteteil 28 aus zwei T-förmigen Elementen besteht, die sich nach oben und unten von dem Rand des Linsenteils 26 wegerstrecken. Folglich besteht das Halteteil 28 aus einem kreisringförmigen ersten Abschnitt 28-1 mit rechteckigem Querschnitt, der sich unmittelbar an den Rand des Linsenteils 26 anschließt, und aus einem zylindrischen zweiten Abschnitt 28-2 mit rechteckigem Querschnitt, der sich an den ersten Abschnitt 28-1 anschließt und quer zu diesem angeordnet ist. Der erste Abschnitt 28-1 dient als Anlagefläche für die vierte Linse 16-4, die ohne Abstandselemente direkt an der fünften Linse 16-5, genauer an dem ersten Abschnitt 28-1 des Halteteils 28 anliegt. Durch den die Austrittsöffnung 24 der zweiten Bohrung 23 umgebenden Teil der Linsenhalterung 18 wird die vierte Linse 16-4 gehalten. Auch die erste, zweite und dritte Linse 16-1, 16-2, 16-3 stützen sich in ihrem Randbereich aneinander ab und werden in radialer Richtung durch die Linsenhalterung 18 gestützt.

Vor der ersten Linse 16-1 ist eine lichtdurchlässige Schutzabdeckung in Form einer planparallelen, transparenten Platte 30 vorgesehen, die das Weitwinkelobjektiv vor Umwelteinflüssen schützt. Das Vorsehen der planparallelen Platte 30 anstelle der üblicherweise für solche Kameras verwendeten sphärischen oder dome-förmigen Abdeckungen bedingt zwar, dass die optischen Eigenschaften der Platte 30 bei der Berechnung des Weitwinkelobjektives mit berücksichtigt werden müssen. Dieser zusätzliche Aufwand wird aber durch die geringeren Kosten der planparallelen Platte 30 im Vergleich zu einer sphärischen Abdeckung mehr als wett gemacht. In Fig. 1 ist auch die optische Baulänge OBL des Objektivs, d. h. der Abstand zwischen der Außenseite der transparenten Schutzabdeckung 30 und der Oberfläche des Bild-Sensors 12 eingezeichnet. Die optische Baulänge OBL beträgt bei der Ausführungsform der Erfindung mit einem Feld- bzw. Bildwinkel von 120° 18 mm und bei einem Feld- bzw. Bildwinkel von 142° 21,4 mm.

Fig. 2 stellt das optische Funktionsschaltbild der Ausführungsform nach Fig. 1 dar und zeigt die Anordnung der fünf Linsen 16-1 bis 16-5 auf der optischen Achse OA des Weitwinkelobjektives gemäß der vorliegenden Erfindung. In Fig. 2 sind fünf verschieden Strahlengängen 32-1 bis 32-5 aus unterschiedlichen vertikalen Feldwinkeln α mit Werten für α zwischen dem maximalen Feldwinkel von 142°/120° bis 30° eingezeichnet (in Fig. 2 sind jeweils die Werte für α/2, d. h. der Winkel zwischen optischer Achse OA und dem jeweiligen Einstrittsstrahl eingezeichnet). Zusätzlich sind in Fig. 2 auch die Dicke und die radiale Ausdehnung der einzelnen Linsen 16-1 bis 16-5 eingezeichnet und angegeben.

Der Aufbau der zweiten Ausführungsform hinsichtlich der Abfolge der einzelnen Linsen, der Blende, der transparenten Schutzabdeckung etc. entspricht dem Aufbau der ersten Ausführungsform. Bei der zweiten Ausführungsform ist lediglich zwischen den beiden Linsen der zweiten Linsengruppe, d. h. zwischen der vierten und der fünften Linse ein Distanzring mit einer Dicke von 0,7 mm angeordnet.

### Bezugszeichenliste:

- α: Feldwinkel
- OBL: optische Baulänge
- OA: optische Achse
- 2: erste Linsengruppe
- 4: Eintrittsfenster
- 6: optische Blende
- 8: zweite Linsengruppe
- 10: Bildfläche
- 12: Bild-Sensor
- 14: IR-Cut-Filter
- 16-1: erste Linse
- 16-2: zweite Linse
- 16-3: dritte Linse
- 16-4: vierte Linse
- 16-5: fünfte Linse
- 18: Linsenhalterung
- 20: Sackbohrung in 18
- 22: Eintrittsöffnung
- 23: zweite Bohrung
- 24: Austrittsöffnung
- 26: Linsenteil
- 28: Halteteil
- 28-1: erster Abschnitt von 28
- 28-2: zweiter Abschnitt von 28
- 30: transparente Schutzabdeckung
- 32-i: Strahlengänge

## Patentansprüche

1. Weitwinkelobjektiv, insbesondere für eine Weitwinkelkamera im automotiven Bereich, mit
einem Objektiv mit einer Mehrzahl von Linsen (16-i),
einer vor dem Objektiv angeordneten transparenten Schutzabdeckung (30), **dadurch gekennzeichnet,**
**dass** die Schutzabdeckung eine transparente plane Platte (30) ist.

2. Weitwinkelobjektiv nach Anspruch 1, **dadurch gekennzeichnet, dass** die plane Platte eine planparallele Platte (30) ist.

3. Weitwinkelobjektiv nach Anspruch 1 oder 2, **dadurch gekennzeichnet, dass** die Platte eine Glasplatte (30) ist.

4. Weitwinkelobjektiv, insbesondere nach einem der vorhergehenden Ansprüche, mit
einer ersten Linsengruppe (2) mit einer Eintrittsöffnung (4) zur Erfassung von Licht von einem aufzunehmenden Objekt aus einem diagonalen Feldwinkel α von 120° ± 10°,
einer der ersten Linsengruppe (2) nach geschalteten optischen Blende (6), und
einer zweiten Linsengruppe (8), die der optischen Blende (6) nach geschaltet ist, und das von der ersten Linsengruppe (2) durch die optische Blende (2) hindurchgeleitetet Licht auf eine Bildfläche (10) mit einer Verzeichnung von < 5% und vorzugsweise < 3% projiziert.

5. Weitwinkelobjektiv nach Anspruch 4, **dadurch gekennzeichnet, dass** die zweite Linsengruppe (8) eine asphärische Linse (16-5) zur Korrektur der Verzeichnung enthält.

6. Weitwinkelobjektiv nach Anspruch 5, **dadurch gekennzeichnet, dass** die asphärische Linse (16-5) eine Biasphäre ist.

7. Weitwinkelobjektiv nach Anspruch 4 oder 5, **dadurch gekennzeichnet, dass** die asphärische Linse ein konkav-konvexe asphärische Linse ist.

8. Weitwinkelobjektiv nach einem der vorhergehenden Ansprüche, **dadurch gekennzeichnet, dass** das Weitwinkelobjektiv maximal fünf Linsen (16-i) enthält.

9. Weitwinkelobjektiv nach einem der vorhergehenden Ansprüche 4 bis 8, **dadurch gekennzeichnet, dass** die erste Linsengruppe (2) maximal drei Linsen (16-1, 16-2, 16-3) enthält.

10. Weitwinkelobjektiv nach einem der vorhergehenden Ansprüche 4 bis 9, **dadurch gekennzeichnet, dass** die zweite Linsengruppe (8) maximal zwei Linsen (16-4, 16-5) enthält.

11. Weitwinkelobjektiv nach einem der vorhergehenden Ansprüche 4 bis 10, **dadurch gekennzeichnet, dass** die optische Baulänge (OBL) des Weitwinkelobjektivs 18,0 mm ± 5 mm beträgt.

12. Weitwinkelobjektiv nach einem der vorhergehenden Ansprüche 4 bis 11, **dadurch gekennzeichnet, dass** die optische Blende (6) von dem Eintrittsfenster (4) aus betrachtet bei 60% ±10% der optischen Baulänge (OBL) angeordnet ist.

13. Weitwinkelobjektiv nach einem der vorhergehenden Ansprüche 4 bis 12, **dadurch gekennzeichnet, dass** die optische Blende (6) 1,26 mm ±0,5 mm beträgt.

14. Weitwinkelobjektiv nach einem der vorhergehenden Ansprüche 4 bis 13, **dadurch gekennzeichnet,**
**dass** die erste Linsengruppe (2) eine erste, zweite und eine dritte Linse (16-1, 16-2, 16-3) und dass die zweite Linsengruppe (8) eine vierte und eine fünfte Linse (16-4, 16-5) enthält,
**dass** die erste Linse (16-1) konvex-konkav mit einem ersten Radius (R₁₁) von 11,6 mm ± δ% und einem zweiten Radius (R₁₂) von -5,2 mm ± δ% ist,
**dass** die zweite Linse (16-2) konvex-konkav mit einem ersten Radius (R₂₁)von 45,2 mm ± δ% einem zweiten Radius (R₂₂) von -6,1 mm ± δ% ist,
**dass** die dritte Linse (16-3) bikonvex mit einem ersten Radius (R₃₁) von 44,9 mm ± δ% einem zweiten Radius (R₃₂) von 10,9 mm ± δ% ist, dass die vierte Linse (16-4) bikonvex mit einem ersten Radius (R₄₁) von 4,3 mm ± δ% einem zweiten Radius (R₄₂) von 7,8 mm ± δ% ist, dass die fünfte Linse (16-5) die konkav-konvexe Biasphäre ist, und
das δ% im Bereich zwischen 1 % und 15% und vorzugsweise zwischen 1 % und 5% liegt.

15. Weitwinkelobjektiv nach Anspruch 14, **dadurch gekennzeichnet, dass** die Brechzahl der ersten Linse (16-1) 1,79 beträgt.

16. Weitwinkelobjektiv nach einem der vorhergehenden Ansprüche 14 bis 15, **dadurch gekennzeichnet, dass** die Brechzahl der zweiten Linse (16-2) 1,77 beträgt.

17. Weitwinkelobjektiv nach einem der vorhergehenden Ansprüche 14 bis 16, **dadurch gekennzeichnet, dass** die Brechzahl der dritten Linse (16-3) 1,84 beträgt.

18. Weitwinkelobjektiv nach einem der vorhergehenden Ansprüche 14 bis 17, **dadurch gekennzeichnet, dass** die Brechzahl der vierten Linse (16-4) 1,77 beträgt.

19. Weitwinkelobjektiv nach einem der vorhergehenden Ansprüche 14 bis 18, **dadurch gekennzeichnet, dass** die Brechzahl der fünften Linse (16-5) 1,53 beträgt.

20. Weitwinkelobjektiv nach einem der vorhergehenden Ansprüche 14 bis 19, **dadurch gekennzeichnet, dass** die vierte Linse (16-4) insbesondere zur Korrektur der Bildfeldwölbung ausgelegt ist.

21. Weitwinkelobjektiv, insbesondere nach einem der vorhergehenden Ansprüche 1 bis 3, mit
einer ersten Linsengruppe (2) mit einer Eintrittsöffnung (4) zur Erfassung von Licht von einem aufzunehmenden Objekt aus einem diagonalen Feldwinkel α von 142° ± 10°,
einer der ersten Linsengruppe (2) nach geschalteten optischen Blende (6), und
einer zweiten Linsengruppe (8), die der optischen Blende (6) nach geschaltet ist, und das von der ersten Linsengruppe (2) durch die optische Blende (2) hindurchgeleitetet Licht auf eine Bildfläche (10) mit einer Verzeichnung von < 17% und vorzugsweise < 15% projiziert.

22. Weitwinkelobjektiv nach Anspruch 21, **dadurch gekennzeichnet, dass** die zweite Linsengruppe (8) eine asphärische Linse (16-5) zur Korrektur der Verzeichnung enthält.

23. Weitwinkelobjektiv nach Anspruch 22, **dadurch gekennzeichnet, dass** die asphärische Linse (16-5) eine Biasphäre ist.

24. Weitwinkelobjektiv nach Anspruch 22 oder 23, **dadurch gekennzeichnet, dass** die asphärische Linse ein konkav-konvexe asphärische Linse ist.

25. Weitwinkelobjektiv nach einem der vorhergehenden Ansprüche 21 bis 24, **dadurch gekennzeichnet, dass** das Weitwinkelobjektiv maximal fünf Linsen (16-i) enthält.

26. Weitwinkelobjektiv nach einem der vorhergehenden Ansprüche 21 bis 25, **dadurch gekennzeichnet, dass** die erste Linsengruppe (2) maximal drei Linsen (16-1, 16-2, 16-3) enthält.

27. Weitwinkelobjektiv nach einem der vorhergehenden Ansprüche 21 bis 26, **dadurch gekennzeichnet, dass** die zweite Linsengruppe (8) maximal zwei Linsen (16-4, 16-5) enthält.

28. Weitwinkelobjektiv nach einem der vorhergehenden Ansprüche 21 bis 27, **dadurch gekennzeichnet, dass** die optische Baulänge (OBL) des Weitwinkelobjektivs 21,4 mm ± 5 mm beträgt.

29. Weitwinkelobjektiv nach einem der vorhergehenden Ansprüche 21 bis 28, **dadurch gekennzeichnet, dass** die optische Blende (6) von dem Eintrittsfenster (4) aus betrachtet bei 75% ±10% der optischen Baulänge (OBL) angeordnet ist.

30. Weitwinkelobjektiv nach einem der vorhergehenden Ansprüche 21 bis 29, **dadurch gekennzeichnet, dass** die optische Blende (6) 0,85 mm ±0,5 mm beträgt.

31. Weitwinkelobjektiv nach einem der vorhergehenden Ansprüche 21 bis
30, **dadurch gekennzeichnet,**
**dass** die erste Linsengruppe (2) eine erste, zweite und eine dritte Linse (16-1, 16-2, 16-3) und dass die zweite Linsengruppe (8) eine vierte und eine fünfte Linse (16-4, 16-5) enthält,
**dass** die erste Linse (16-1) konvex-konkav mit einem ersten Radius (R₁₁) von 13,7 mm ± δ% und einem zweiten Radius (R₁₂) von -4,7 mm ± δ% ist,
**dass** die zweite Linse (16-2) konvex-konkav mit einem ersten Radius (R₂₁)von 153,4 mm ± δ% und einem zweiten Radius (R₂₂) von-6,0 mm ± δ% ist,
**dass** die dritte Linse (16-3) plan-konvex mit einem ersten Radius (R₃₁) von Unendlich und einem zweiten Radius (R₃₂) von 8,5 mm ± δ% ist, dass die vierte Linse (16-4) bikonvex mit einem ersten Radius (R₄₁) von 6,8 mm ± δ% und einem zweiten Radius (R₄₂) von 4,2 mm ± δ% ist,
**dass** die fünfte Linse (16-5) die konkav-konvexe Biasphäre ist,
und **dass** δ% im Bereich zwischen 1 % und 15% und vorzugsweise zwischen 1 % und 5% liegt.

32. Weitwinkelobjektiv nach Anspruch 31, **dadurch gekennzeichnet, dass** die Brechzahl der ersten Linse (16-1) 1,77 beträgt.

33. Weitwinkelobjektiv nach einem der vorhergehenden Ansprüche 31 bis 32, **dadurch gekennzeichnet, dass** die Brechzahl der zweiten Linse (16-2) 1,79 beträgt.

34. Weitwinkelobjektiv nach einem der vorhergehenden Ansprüche 31 bis 33, **dadurch gekennzeichnet, dass** die Brechzahl der dritten Linse (16-3) 1,85 beträgt.

35. Weitwinkelobjektiv nach einem der vorhergehenden Ansprüche 31 bis 34, **dadurch gekennzeichnet, dass** die Brechzahl der vierten Linse (16-4) 1,75 beträgt.

36. Weitwinkelobjektiv nach einem der vorhergehenden Ansprüche 31 bis 35, **dadurch gekennzeichnet, dass** die Brechzahl der fünften Linse (16-5) 1,53 beträgt.

37. Weitwinkelobjektiv nach einem der vorhergehenden Ansprüche 31 bis 36, **dadurch gekennzeichnet, dass** die vierte Linse (16-4) insbesondere zur Korrektur der Bildfeldwölbung ausgelegt ist.

38. Weitwinkelobjektiv nach einem der vorhergehenden Ansprüche 4 bis 37, **dadurch gekennzeichnet, dass** die Linsen (16-1, 16-2, 16-3) innerhalb der ersten Linsengruppe (2) und/oder die Linsen (16-4,16-5) innerhalb der zweiten Linsengruppe (8) im direkten Kontakt zueinander ohne Abstandselemente dazwischen angeordnet sind.

39. Weitwinkelobjektiv nach einem der vorhergehenden Ansprüche 4 bis 38, **dadurch gekennzeichnet, dass** die optische Blende (6) durch eine zylindrische Bohrung (20) in einer Linsenhalterung (18) mit einer Blendenöffnung im Boden der zylindrischen Bohrung (20) realisiert ist, und dass der Durchmesser der zylindrischen Bohrung (20) größer ist als der Blendendurchmesser.

40. Weitwinkelkamera zur Überwachung der unmittelbaren Umgebung von Kraft- und Nutzfahrzeugen mit
einer elektronischen Bildaufnahmeeinheit (12) vor der ein Weitwinkelobjektiv angeordnet ist, **dadurch gekennzeichnet,**
**dass** die Korrektur von Bildfehlern in den von der Bildaufnahmeeinheit (12) aufgenommenen Bildern durch das Weitwinkelobjektiv erfolgt.

41. Weitwinkelkamera nach Anspruch 47, **gekennzeichnet durch** ein Weitwinkelobjektiv nach einem der vorhergehenden Ansprüche 1 bis 39.

42. Weitwinkelkamera nach Anspruch 41 oder 41, **dadurch gekennzeichnet, dass** vor der Bildaufnahmeeinheit (12) ein IR-Filter (14) angeordnet ist.
